# EUROPEAN PATENT SPECIFICATION

(11) **EP 0 927 402 B1**
(45) Date of publication and mention of the grant of the patent: **17.03.2004**
(21) Application number: 98930210.4
(22) Date of filing: 18.06.1998
(51) Int. Cl.: G06K 9/00

(54) **ELECTROLUMINESCENT FINGERPRINT APPARATUS AND METHOD**
ELEKTROLUMINESCENTES FINGERABDRUCKGERÄT UND VERFAHREN
DISPOSITIF ET PROCEDE SERVANT A PRODUIRE UNE EMPREINTE DIGITALE ELECTROLUMINESCENTE

(30) Priority: 27.06.1997 US 883154
(43) Date of publication of application: 07.07.1999
(60) Divisional application: 03016700.1
(73) Proprietor: Security First Corporation, Rancho Santa Margarita, CA 92679 (US)
(72) Inventor: La Freniere, Jon E., Dallas, TX 75219 (US); Rowley, Stephen H., Plano, TX 75074 (US)
(74) Representative: Beyer, Andreas, Dr.
(86) International application number: PCT/US1998/012356
(87) International publication number: WO 1999/000761

(56) References cited:
- EP-A- 0 455 401
- WO-A-99/12472
- FR-A- 2 678 821
- US-A- 5 483 601
- US-A- 5 564 128
- US-A- 5 726 443
- US-A- 5 781 651
- DATABASE WPI Derwent Publications Ltd., London, GB; AN 8348904K XP002080114 & SU 942 384 A (AS AZERB PHYSICS) , 15 July 1982
- DATABASE WPI Derwent Publications Ltd., London, GB; AN 8175251d XP002080115 & SU 797 657 A (AS AZERB PHYSICS)

## Description

### TECHNICAL FIELD

The present invention relates to an electroluminescent fingerprint machine and method for generating an electroluminescent fingerprint and, more particularly, to an electroluminescent fingerprint machine coupled to a computer that stores a digitized image of the electroluminescent fingerprint.

### BACKGROUND OF THE INVENTION

Biometrics is a term used to refer to the statistical analysis of biological observations which includes the gathering and comparison of fingerprints to ascertain the identity of an individual. There are numerous applications in fields such as criminal investigations and personal/corporate security that may incorporate the verification of an individual's identity based upon a fingerprint. The applications involving criminal investigations are well known.

Verification of an individual's identity based upon a fingerprint within the personal and corporate environments is a valuable and useful tool. For example, verification of an individual's identity may reduce the fraud associated with improper use of credit cards. Also, a security system installed in an automobile may include a fingerprint-verification process where only pre-selected individuals may enter and operate the automobile. Applications within the corporate environment may include a fingerprint-identification system that maintains and controls security clearance and access to buildings, networks and databases.

As is well known, the conventional manner of gathering an individual's fingerprint was to place ink on a finger of the individual and then roll the finger over a piece of paper to create an image of the fingerprint. Using the ink and paper combination is very messy and susceptible to the image of the fingerprint being smeared. An optical scanner is then used to illuminate the image of the fingerprint such that a digitized image is captured by the computer. The digitized image is then stored within the computer.

A relatively new scanner is currently available that obtains a digitized image of a fingerprint without requiring the use of ink and paper. The scanner utilizes a moving light source to illuminate the fingerprint that is then transformed into a digitized image. The digitized image from the scanning process is then stored in a computer. The scanner utilizes moving components, which makes the scanner susceptible to mechanical failure. An example of a new scanner discussed above is manufactured by IDENTIX Corporation.

Russian patent application publication No. 942 684 discloses an electroluminescent cell having a glass backing, a transparent electrode, a luminophore layer, and a layer made of semiconductor material deposited on the luminophore layer. An AC voltage source having a predetermined frequency in the range from 200 Hz to 200 kHz is coupled between the transparent electrode of the electroluminescent cell and a finger of an individual. The finger is placed in contact with the layer of semiconductor material that is deposited on the luminophore layer.

Russian patent application publication No. 797 657 discloses a similar electroluminescent cell using a different semiconductor material for the semiconductor material layer deposited on the luminophore layer.

Accordingly there is a need for a fingerprint machine that generates an electroluminescent fingerprint. Also there is a need for a fingerprint machine incorporated with a computer system that verifies the identity of an individual. These and other needs are satisfied by the fingerprint machine of the present invention.

### SUMMARY OF THE INVENTION

The present invention is an electroluminescent fingerprint machine and method for generating at least one electroluminescent fingerprint. The electroluminescent fingerprint machine includes an AC power source having an output voltage with a predetermined frequency. A lead from the AC power source connects to an electroluminescent material. Then an individual completes the electrical circuit between the AC power source and the electroluminescent material by placing one finger onto a contact area of the electroluminescent material and another body part to a ground tab of the AC power source such that at least one electroluminescent fingerprint appears on a front side of the electroluminescent material.

According to the present invention there is provided a fingerprint machine that is economical to manufacture.

Also in accordance with the present invention there is provided a fingerprint machine that operates at a voltage level that does not pose a safety concern to an individual.

Further in accordance with the present invention there is provided a fingerprint machine simple to operate and relatively portable.

Further in accordance with the present invention there is provided a method for generating at least one electroluminescent fingerprint.

### BRIEF DESCRIPTION OF THE DRAWINGS

A more complete understanding of the invention may be had by reference to the following Detailed Description when taken in conjunction with the accompanying Drawings wherein:
FIGURE 1 is a block diagram of a fingerprint machine of the present invention that generates an electroluminescent fingerprint; and
FIGURE 2 is a block diagram where the fingerprint machine of FIGURE 1 is incorporated with a computer system.

### DETAILED DESCRIPTION OF THE DRAWINGS

Referring to the Drawings, wherein like numerals represent like parts throughout the several views, there is disclosed an electroluminescent fingerprint machine 100 in accordance with the present invention.

Although a preferred embodiment of the fingerprint machine 100 incorporated with a computer system 200 used to verify the identity of an individual 102 will be described, those skilled in the art will appreciate that such application is only one of many utilizing the fingerprint machine 100. Accordingly, the fingerprint machine 100 described should not be construed in a limited manner.

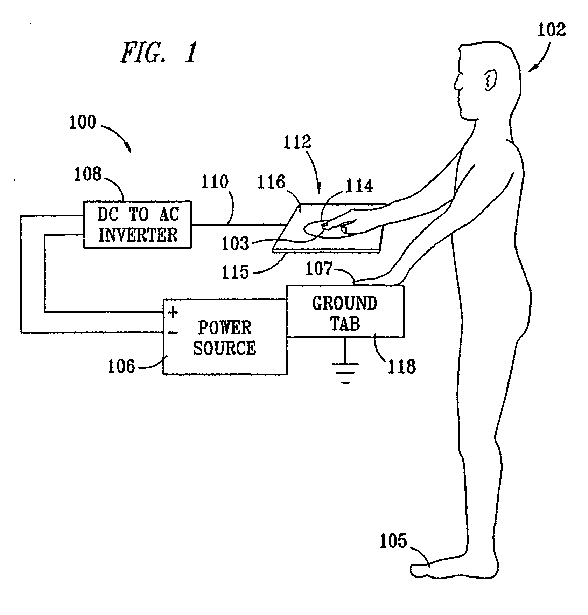

Referring to FIGURE 1, there is illustrated a block diagram of the fingerprint machine 100 that generates an electroluminescent fingerprint 104. The fingerprint machine 100 includes a power source 106 electrically connected to an inverter 108 which in combination forms an alternating current (AC) power source. The power source 106 is preferably a battery that outputs direct current (DC) to the inverter 108 which in turn converts DC to AC power and generates an output voltage having a predetermined frequency. The output voltage may be any voltage in which it is safe for the individual 102 to contact. While the predetermined frequency is generally in the range of 400-1000Hz.

The inverter 108 is connected by a single lead 110 to an electroluminescent material 112. The electroluminescent material 112 emits a light produced by luminescence, which results from applying alternating current to a layer of phosphor. The electroluminescent material 112 has a contact area 114 where insulation 116 has been removed thereby permitting contact to an electrically alive portion of the electroluminescent material. The light produced by the luminescence is preferably green, however, other colors are permissible. The electroluminescent material 112 may be of the type manufactured by Electroluminescent Technologies Corporation and identified under the trademark NovaLite.

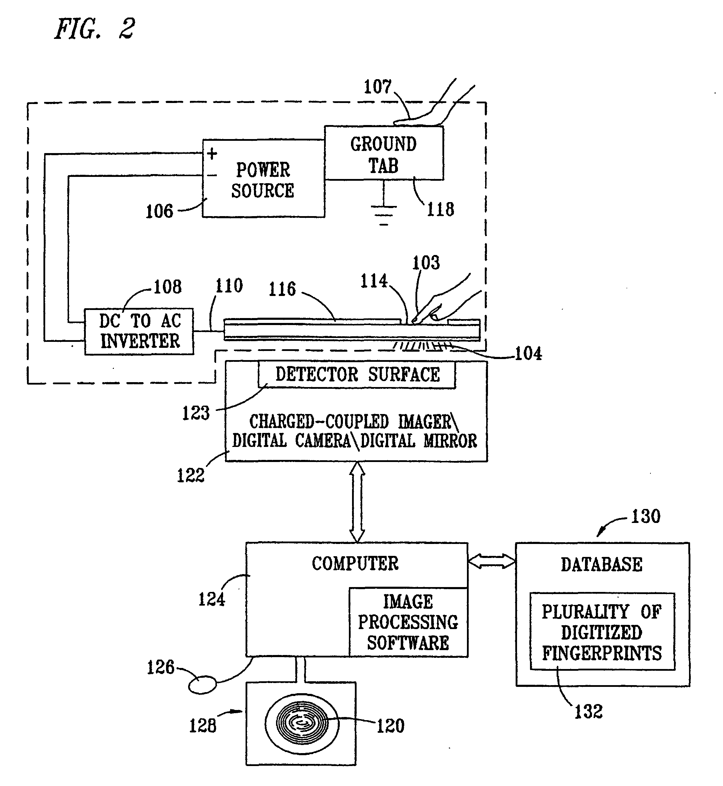

The electroluminescent fingerprint 104 is generated when the individual 102 applies a finger 103 to the contact area 114 located on the electroluminescent material 112 and also contacts a ground tab 118 of the power source 106 such that the individual has completed an electrical circuit between the power source and the electroluminescent material. A foot 105 or a finger on another hand 107 of the individual 102 may be used to contact the ground tab 118. After completing the electrical circuit, the electroluminescent fingerprint 104 (see FIGURE 2) of the individual 102 is illuminated on a front side 115 of the electroluminescent material 112.

Referring to FIGURE 2, there is illustrated the fingerprint machine 100 incorporated with a computer system 200. The computer system 200 is interfaced with the fingerprint machine 100 such that the electroluminescent fingerprint 104 is captured as a digitized image 120. A charge-coupled imager 122 positioned near the front side 115 of the electroluminescent material 112 may be used to convert the electroluminescent fingerprint 104 into the digitized image 120. A digital camera or digital mirror (see Figure 2) are also considered functional equivalents to the charge-coupled imager 122.

The charge-coupled imager 122 generates a digital exposure or the digitized image 120 from an analog image of the electroluminescent fingerprint 104 by the use of a detector surface 123. The detector surface 123 has thousands of pixels that store electrons in response to photons that are emitted by the electroluminescent fingerprint 104. The stored electrons located in the pixels are representative of the electroluminescent fingerprint 104 and are used to generate the digitized image 120. The greater number of electrons stored in each pixel the greater the intensity or brightness of a particular portion of the electroluminescent fingerprint 104.

The charge-coupled imager 122 further includes image processing software that can transform a relatively "poor" digitized image 120 into a "good" digitized image by substantially reducing undesirable interferences such as dark current. The dark current is further reduced by using thermoelectric cooling to maintain a predetermined temperature on the detector surface. Also, the charge-coupled imager 122 includes flat-field compensation and built-in blooming correction to increase the accuracy of the digitized image 120. The charge-coupled imager 122 may be of the type manufactured by Meade Instruments Corporation and identified as Meade Pictor XT-Series CCD Autoguider/Imagers.

A computer 124 stores the image processing software and is coupled to the charge-coupled imager 122. The computer 124 may be a personal computer or a mainframe computer depending upon the particular application. Centering and focusing of the digitized image 120 within the charge-coupled imager 122 may be accomplished by software in that a user (not shown) need only to click a mouse 126 indicated on a display 128 of the computer 124.

The computer 124 includes files or a database 130 that contains a plurality of digitized fingerprints 132. Each digitized fingerprint 132 corresponds to a particular person whose identity is known. The digitized image 120 of the individual 102 is preferably included within the plurality of digitized fingerprints 132. The computer 124 then functions to compare the digitized image 120 of-the individual 102 to the plurality of digitized fingerprints 132 stored in the database 130 to find a match and ascertain the identity of the individual. If no match is found, the digitized image 120 is still stored in the computer 124 for future reference.

In verifying the identity of the individual 102 software within the computer 124 compares several types of identifying characteristics associated with the digitized image 120 to that of the plurality of digitized fingerprints 132. The identifying characteristics of a fingerprint include minutiae (i.e., a ridge end or a bifurcation), the location of the minutiae, the direction in which the minutiae are pointing, and the intervening ridge counts. For most law enforcement applications a minimum of eight minutiae must be in full coincident sequence to confirm the identity of the individual 102. Commercial applications may be less strict in the comparison analysis.

The software may also be configured to generate a list identifying people from the plurality of digitized fingerprints 132 that most closely resembles the digitized fingerprint 120. Thereafter, a user may make manual comparisons between the generated list of the digitized fingerprints 132 to the digitized image 120 to determine or verify the identity of the individual 102.

While the present invention has been described with reference to the illustrated embodiment, it is not intended to limit the invention but, on the contrary, it is intended to cover such alternatives, modifications and equivalents as may be included in the scope of the invention as defined in the following claims.

## Claims

1. An electroluminescent fingerprint machine (100)
comprising:
- means for producing an output voltage having a predetermined frequency; and
- an electroluminescent material (112) connected to one lead from the means for producing, where an individual (102) completes the electrical circuit between the electroluminescent material (112) and the means for producing by placing one finger onto a contact area (114) of the electroluminescent material (112) and another body part to a ground tab of the means for producing such that an electroluminescent fingerprint (104) appears on a front side of the electroluminescent material (112).

2. The electroluminescent fingerprint machine in accordance with Claim 1 further comprising means adjacent the electroluminescent material (112) for capturing a digitized image (120) of the electroluminescent fingerprint (104).

3. The electroluminescent fingerprint machine in accordance with Claim 2 wherein the means for capturing further includes a charge-coupled imager (122).

4. The electroluminescent fingerprint machine in accordance with Claim 2 wherein the means for capturing further includes a digital camera.

5. The electroluminescent fingerprint machine in accordance with Claim 2 wherein the means for capturing further indudes a digital mirror.

6. The electroluminescent fingerprint machine in accordance with Claim 2 further comprising a computer (124) that stores the digitized image (120), said computer (124) coupled to the means for capturing.

7. The electroluminescent fingerprint machine in accordance with Claim 6 wherein said computer (124) further includes a plurality of digitized fingerprints (132) stored in the computer (124), each digitized fingerprint (132) corresponds to a particular person, said plurality of digitized fingerprints (132) indudes the digitized image (120).

8. The electroluminescent fingerprint machine in accordance with Claim 7 wherein said computer (124) further includes means for comparing the plurality of digitized fingerprints (132) to the digitized image (120) until the identity of the individual (102) has been ascertained.

9. The electroluminescent fingerprint machine in accordance with Claim 7 wherein said computer (124) further includes means for comparing the plurality of digitized fingerprints (132) to the digitized image (120) and generating a list identifying the digitized fingerprints (132) that are substantially similar to the digitized image (120).

10. The electroluminescent fingerprint machine in accordance with Claim 1 wherein said means for producing further includes means for adjusting the predetermined frequency, wherein the brightness of the digitized image (120) relates to the predetermined frequency.

11. The electroluminescent fingerprint machine in accordance with Claim 1 wherein the electroluminescent material (112) further includes at least one layer of phosphor.

12. The electroluminescent fingerprint machine in accordance with Claim 1 wherein the means for producing further includes a power source (106) coupled to an inverter (108).

13. A method for generating at least one electroluminescent fingerprint (104) comprising the steps of:
- producing an output voltage having a predetermined frequency;
- connecting a single lead of the output voltage to an electroluminescent material (112);
- applying at least one finger of an individual (102) to a contact area (114) of the electroluminescent material (112); and
- completing an electrical circuit between the output voltage, the electroluminescent material (112), and the individual (102). such that the at least one electroluminescent fingerprint (104) appears on a front side of the electroluminescent material (112).

14. The method in accordance with Claim 13 further comprising a step of capturing a digitized image (120) of the at least one electroluminescent fingerprint (104).

15. The method in accordance with Claim 14 further comprising a step of inputting the digitized image (120) into a computer (124).

16. The method in accordance with Claim 15 further comprising a step of storing in the computer (124) a plurality of digitized fingerprints (132), each digitized fingerprint (132) corresponds to a particular person and said plurality of digitized fingerprints (132) includes the digitized image (120).

17. The method in accordance with Claim 16 further comprising:
- comparing the plurality of digitized fingerprints (132) to the digitized image (120); and
- confirming the identity of the individual (102).

18. The method in accordance with Claim 16 further comprising:
- comparing the plurality of digitized fingerprints (132) to the digitized image (120); and
- generating a list of the plurality of digitized fingerprints (132) that are substantially similar to the digitized image (120).

19. The method in accordance with Claim 13 wherein the step of producing further includes adjusting the predetermined frequency, wherein the brightness of the digitized image (120) relates to the predetermined frequency.

20. An apparatus for obtaining at least one electroluminescent fingerprint from an individual (102) comprising:
- an alternating current power source (106) that outputs an AC voltage having a predetermined frequency;
- an electroluminescent material (112) connected to a lead from the power source (106), where the individual (102) completes the electrical circuit between the electroluminescent material (112) and the power source (106) by placing one finger onto a contact area (114) of the electroluminescent material (112). and another body part to a ground tab of the power source (106) such that said at least one electroluminescent fingerprint (104) appears on a front side of the electroluminescent. material;
- a charge-coupled imager (122) adjacent the front side of the electroluminescent material (112), said charge-coupled imager (122) captures a digitized image (120) of the at least one electroluminescent fingerprint (104);
- a computer (124) electrically connected to the charge-coupled imager (122) for storing the digitized image (120) and a plurality of digitized fingerprints, each digitized fingerprint image corresponds to a particular person, said computer (124) further compares the plurality of digitized fingerprints (132) to the digitized image (120) until the identity of the individual (102) has been ascertained.

21. The apparatus in accordance with Claim 20 wherein said computer (124) further includes means for comparing the plurality of digitized fingerprints (132) to the digitized image (120) and generating a list of the plurality of digitized fingerprints (132) that are substantially similar to the digitized image (120).

22. The apparatus in accordance with Claim 20 wherein said inverter (108) further includes means for adjusting the predetermined frequency, wherein the brightness of the digitized image (120) relates to the predetermined frequency.

## Patentansprüche

1. Elektrolumineszente Fingerabdruckmaschine (100) mit:
- Einrichtungen zum Erzeugen einer Ausgangsspannung mit einer vorbestimmten Frequenz, und
- einem elektrolumineszenten Material (112), das mit einer Leitung von der Erzeugungseinrichtung verbunden ist, wobei eine Person (102) die elektrische Schaltung zwischen dem elektrolumineszenten Material (112) und der Erzeugungseinrichtung vervollständigt, indem sie einen Finger auf eine Kontaktfläche (114) des elektrolumineszenten Materials (112) und einen anderen Körperteil auf eine Massefläche der Erzeugungseinrichtung legt, so dass ein elektrolumineszenter Fingerabdruck (104) auf einer Vorderseite des elektrolumineszenten Materials (112) erscheint.

2. Elektrolumineszente Fingerabdruckmaschine nach Anspruch 1,
die ferner dem elektrolumineszenten Material (112) benachbarte Einrichtungen zum Erfassen eines digitalisierten Bildes (120) des elektrolumineszenten Fingerabdrucks (104) umfasst.

3. Elektrolumineszente Fingerabdruckmaschine nach Anspruch 2,
bei der die Erfassungseinrichtung ferner einen ladungsgekoppelten Bildsensor (122) umfasst.

4. Elektrolumineszente Fingerabdruckmaschine nach Anspruch 2,
bei der die Erfassungseinrichtung ferner eine Digitalkamera umfasst.

5. Elektrolumineszente Fingerabdruckmaschine nach Anspruch 2,
bei der die Erfassungseinrichtung ferner einen Digitalspiegel umfasst.

6. Elektrolumineszente Fingerabdruckmaschine nach Anspruch 2,
die ferner einen Rechner (124) umfasst, der das digitalisierte Bild (120) speichert, wobei der Rechner (124) mit der Erfassungseinrichtung verbunden ist.

7. Elektrolumineszente Fingerabdruckmaschine nach Anspruch 6,
bei der der Rechner (124) ferner eine Mehrzahl von im Rechner (124) gespeicherten, digitalisierten Fingerabdrücken (132) umfasst, wobei jeder digitalisierte Fingerabdruck (132) einer bestimmten Person entspricht und wobei die Mehrzahl von digitalisierten Fingerabdrücken (132) das digitalisierte Bild (120) umfasst.

8. Elektrolumineszente Fingerabdruckmaschine nach Anspruch 7,
bei der der Rechner (124) ferner Einrichtungen zum Vergleichen der Mehrzahl von digitalisierten Fingerabdrücken (132) mit dem digitalisierten Bild (120) bis zur Feststellung der Identität der Person (102) umfasst.

9. Elektrolumineszente Fingerabdruckmaschine nach Anspruch 7,
bei der der Rechner (124) ferner Einrichtungen zum Vergleichen der Mehrzahl von digitalisierten Fingerabdrücken (132) mit dem digitalisierten Bild (120) und Erzeugen einer Liste umfasst, welche die digitalisierten Fingerabdrücke (132) identifiziert, die dem digitalisierten Bild (120) im Wesentlichen ähnlich sind.

10. Elektrolumineszente Fingerabdruckmaschine nach Anspruch 1,
bei der die Erzeugungseinrichtung ferner Einrichtungen zum Einstellen der vorbestimmten Frequenz umfasst, wobei die Helligkeit des digitalisierten Bildes (120) in Beziehung zur vordefinierten Frequenz steht.

11. Elektrolumineszente Fingerabdruckmaschine nach Anspruch 1,
bei der das elektrolumineszente Material (112) ferner zumindest eine Phosphorschicht umfasst.

12. Elektrolumineszente Fingerabdruckmaschine nach Anspruch 1,
bei der die Erzeugungseinrichtung ferner eine Energiequelle (106) umfasst, die mit einem Inverter (108) verbunden ist.

13. Verfahren zum Erzeugen zumindest eines elektrolumineszenten Fingerabdrucks (104), das die Schritte umfasst:
- Erzeugen einer Ausgangsspannung mit einer vorbestimmten Frequenz,
- Verbinden einer einzelnen Leitung der Ausgangsspannung mit einem elektrolumineszenten Material (112),
- Auflegen zumindest eines Fingers einer Person (102) auf eine Kontaktfläche (114) des elektrolumineszenten Materials (112), und
- Vervollständigen einer elektrischen Schaltung zwischen der Ausgangsspannung, dem elektrolumineszenten Material (112) und der Person (102), so dass der zumindest eine elektrolumineszente Fingerabdruck (104) auf einer Vorderseite des elektrolumineszenten Materials (112) erscheint.

14. Verfahren nach Anspruch 13,
das ferner einen Schritt zum Erfassen eines digitalisierten Bildes (120) des zumindest einen elektrolumineszenten Fingerabdrucks (104) umfasst.

15. Verfahren nach Anspruch 14,
das ferner einen Schritt zum Eingeben des digitalisierten Bildes (120) in einen Rechner (124) umfasst.

16. Verfahren nach Anspruch 15,
das ferner einen Schritt zum Speichern einer Mehrzahl von digitalisierten Fingerabdrücken (132) im Rechner (124) umfasst, wobei jeder digitalisierte Fingerabdruck (132) einer bestimmten Person entspricht und die Mehrzahl von digitalisierten Fingerabdrücken (132) das digitalisierte Bild (120) umfasst.

17. Verfahren nach Anspruch 16, das ferner umfasst:
- Vergleichen der Mehrzahl von digitalisierten Fingerabdrücken (132) mit dem digitalisierten Bild (120), und
- Bestätigen der Identität der Person (102).

18. Verfahren nach Anspruch 16, das ferner umfasst:
- Vergleichen der Mehrzahl von digitalisierten Fingerabdrücken (132) mit dem digitalisierten Bild (120), und
- Erzeugen einer Liste der Mehrzahl von digitalisierten Fingerabdrücken (132), die im Wesentlichen dem digitalisierten Bild (120) ähneln.

19. Verfahren nach Anspruch 13,
bei dem der Erzeugungsschritt ferner das Einstellen der vorbestimmten Frequenz umfasst, wobei die Helligkeit des digitalisierten Bildes (120) in Beziehung zur vorbestimmten Frequenz steht.

20. Vorrichtung zum Erhalten zumindest eines elektrolumineszenten Fingerabdrucks von einer Person (102) mit:
- einer Wechselstrom-Energiequelle (106), die eine Wechselspannung mit einer vorbestimmten Frequenz abgibt,
- einem elektrolumineszenten Material (112), das mit einer Leitung von der Energiequelle (106) verbunden ist, wobei die Person (102) die elektrische Schaltung zwischen dem elektrolumineszenten Material (112) und der Energiequelle (106) vervollständigt, indem sie einen Finger auf eine Kontaktfläche (114) des elektrolumineszenten Materials (112) und einen anderen Körperteil auf eine Massefläche der Energiequelle (106) legt, so dass der zumindest eine elektrolumineszente Fingerabdruck (104) auf einer Vorderseite des elektrolumineszenten Materials erscheint,
- einem ladungsgekoppelten Bildsensor (122), der benachbart zur Vorderseite des elektrolumineszenten Materials (112) angeordnet ist, wobei der ladungsgekoppelte Bildsensor (122) ein digitalisiertes Bild (120) des zumindest einen elektrolumineszenten Fingerabdruckes (104) erfasst,
- einem Rechner (124), der mit dem ladungsgekoppelten Bildsensor (122) elektrisch verbunden ist, um das digitalisierte Bild (120) und eine Mehrzahl von digitalisierten Fingerabdrücken zu speichern, wobei jedes digitalisierte Fingerabdruckbild einer bestimmten Person entspricht und wobei der Rechner (124) ferner die Mehrzahl von digitalisierten Fingerabdrücken (132) mit dem digitalisierten Bild (120) vergleicht bis die Identität der Person (102) festgestellt ist.

21. Vorrichtung nach Anspruch 20,
bei der der Rechner (124) ferner Einrichtungen zum Vergleichen der Mehrzahl von digitalisierten Fingerabdrücken (132) mit dem digitalisierten Bild (120) und Erzeugen einer Liste der Mehrzahl von digitalisierten Fingerabdrücken (132) umfasst, die im Wesentlichen dem digitalisierten Bild (120) ähneln.

22. Vorrichtung nach Anspruch 20,
bei der der Inverter (108) ferner Einrichtungen zum Einstellen der vorbestimmten Frequenz umfasst, wobei die Helligkeit des digitalisierten Bildes (120) in Beziehung zur vorbestimmten Frequenz steht.

## Revendications

1. Machine servant à produire une empreinte électroluminescente (100) comprenant:
un moyen de production d'une tension de sortie ayant une fréquence prédéterminée; et
un matériau électroluminescent (112) connecté à un fil depuis le moyen de production, où un individu (102) complète le circuit électrique entre le matériau électroluminescent (112) et le moyen de production en plaçant un doigt sur une zone de contact (114) du matériau électroluminescent (112) et une autre partie du corps sur une tablette de terre du moyen de production de sorte qu'une empreinte électroluminescente (104) apparaisse sur une face avant du matériau électroluminescent (112).

2. Machine servant à produire une empreinte électroluminescente selon la revendication 1, comprenant par ailleurs un moyen adjacent au matériau électroluminescent (112) pour la saisie d'une image numérisée (120) de l'empreinte électroluminescente (104).

3. Machine servant à produire une empreinte électroluminescente selon la revendication 2, dans laquelle le moyen de saisie comprend par ailleurs un transformateur d'image à couplage de charge (122).

4. Machine servant à produire une empreinte électroluminescente selon la revendication 2, dans laquelle le moyen de saisie comprend par ailleurs une caméra numérique.

5. Machine servant à produire une empreinte électroluminescente selon la revendication 2, dans laquelle le moyen de saisie comprend par ailleurs un miroir numérique.

6. Machine servant à produire une empreinte électroluminescente selon la revendication 2, comprenant par ailleurs un ordinateur (124) qui mémorise l'image numérisée (120), ledit ordinateur (124) étant couplé au moyen de saisie.

7. Machine servant à produire une empreinte électroluminescente selon la revendication 6, dans laquelle ledit ordinateur (124) contient par ailleurs une pluralité d'empreintes digitales numériques (132) mémorisées dans l'ordinateur (124), chaque empreinte digitale numérisée (132) correspond à une personne particulière, ladite pluralité d'empreintes digitales numérisées (132) comprend l'image numérisée (120).

8. Machine servant à produire une empreinte électroluminescente selon la revendication 7, dans laquelle ledit ordinateur (124) contient par ailleurs un moyen de comparaison de la pluralité d'empreintes digitales numérisées (132) avec l'image numérisée (120) jusqu'à ce que l'identité de l'individu (102) soit établie.

9. Machine servant à produire une empreinte électroluminescente selon la revendication 7, dans laquelle ledit ordinateur (124) comprend par ailleurs un moyen de comparaison de la pluralité d'empreintes digitales numérisées (132) avec une image numérisée (120) et de génération d'une liste identifiant les empreintes digitales numérisées (132) qui sont sensiblement similaires à l'image numérisée (120).

10. Machine servant à produire une empreinte électroluminescente selon la revendication 1, dans laquelle ledit moyen de production contient par ailleurs un moyen d'ajustage de la fréquence prédéterminée, dans laquelle la brillance de l'image numérisée (120) se rapporte à la fréquence prédéterminée.

11. Machine servant à produire une empreinte électroluminescente selon la revendication 1, dans laquelle le matériau électroluminescent (112) comprend par ailleurs au moins une couche de phosphore.

12. Machine servant à produire une empreinte électroluminescente selon la revendication 1, dans laquelle le moyen de production comprend par ailleurs une source de courant (106) couplée à un inverseur (108).

13. Procédé de génération d'au moins une empreinte électroluminescente (104) comprenant les étapes de:
- production d'une tension de sortie ayant une fréquence prédéterminée;
- connexion d'un fil unique de la tension de sortie à un matériau électroluminescent (112);
- application d'au moins un doigt d'un individu (102) sur une zone de contact (114) du matériau électroluminescent (112); et
- achèvement d'un circuit électrique entre la tension de sortie, le matériau électroluminescent (112) et l'individu (102), de sorte qu'au moins une empreinte électroluminescente (104) apparaisse sur une face avant du matériau électroluminescent (112).

14. Procédé selon la revendication 13, comprenant par ailleurs une étape de saisie d'une image numérisée (120) d'au moins une empreinte électroluminescente (104).

15. Procédé selon la revendication 14, comprenant par ailleurs une étape d'entrée de l'image numérisée (120) dans un ordinateur (124).

16. Procédé selon la revendication 15, comprenant par ailleurs une étape de mémorisation dans l'ordinateur (124) d'une pluralité d'empreintes digitales numérisées (132), chaque empreinte digitale numérisée (132) correspond à une personne particulière et ladite pluralité d'empreintes digitales numérisées (132) comprend l'image numérisée (120).

17. Procédé selon la revendication 16, comprenant par ailleurs:
- la comparaison de la pluralité d'empreintes digitales numérisées (132) avec l'image numérisée (120) et
- la confirmation de l'identité de l'individu (102).

18. Procédé selon la revendication 16, comprenant par ailleurs:
- la comparaison de la pluralité d'empreintes digitales numérisées (132) avec l'image numérisée (120); et
- la génération d'une liste de la pluralité d'empreintes digitales numérisées (132) qui sont sensiblement similaires à l'image numérisée (120).

19. Procédé selon la revendication 13, dans lequel l'étape de production comprend par ailleurs l'ajustement de la fréquence prédéterminée, dans lequel la brillance de l'image numérisée (120) se rapporte à la fréquence prédéterminée.

20. Appareil pour obtenir au moins une empreinte électroluminescente d'un individu (102) comprenant:
- une source de courant alternatif (106) qui produit un courant alternatif ayant une fréquence prédéterminée;
- un matériau électroluminescent (112) connecté à un fit provenant de la source de courant (106), où l'individu (102) complète le circuit électrique entre le matériau électroluminescent (112) et la source de courant (106) en plaçant un doigt sur une zone de contact (114) du matériau électroluminescent (112) et une autre partie du corps sur une tablette de terre de la source de courant (106), de sorte que ladite au moins une empreinte électroluminescente (104) apparaît sur une face avant du matériau électroluminescent;
- un transformateur d'images à couplage de charge (122) adjacent à la face avant du matériau électroluminescent (112), ledit transformateur d'image à couplage de charge (122) saisit une image numérisée (120) de l'au moins une empreinte électroluminescente (104);
- un ordinateur (124) connecté électriquement au transformateur d'image à couplage de charge (122) pour la mémorisation de l'image numérisée (120) et une pluralité d'empreintes digitales numérisées numérisées, chaque image d'empreinte digitale numérisée correspond à une personne particulière, ledit ordinateur (124) compare par ailleurs la pluralité d'empreintes digitales numérisées (132) avec l'image numérisée (120) jusqu'à ce que l'identité de l'individu (102) ait été établie.

21. Appareil selon la revendication 20, dans lequel ledit ordinateur (124) comprend par ailleurs un moyen de comparaison de la pluralité des empreintes digitales numérisées (132) avec l'image numérisée (120) et la génération d'une liste de la pluralité d'empreintes digitales numérisées (132) qui sont sensiblement similaires à l'image numérisée (120).

22. Appareil selon la revendication 20, dans lequel ledit inverseur (108) comprend par ailleurs un moyen d'ajustement de la fréquence prédéterminée, dans lequel la brillance de l'image numérisée (120) se rapporte à la fréquence prédéterminée.
